# FASCICULE DE BREVET EUROPEEN

(11) **EP 4 223 406 B1**
(45) Date de publication et mention de la délivrance du brevet: **11.12.2024**
(21) Numéro de dépôt: 23154697.9
(22) Date de dépôt: 02.02.2023
(51) Int. Cl.: B01J 8/00, B01J 15/00, B01J 19/32, B01J 4/00, B66C 1/10, B66C 1/42, B01D 47/14

(54) **DISPOSITIF D'INSERTION D'UN TRONÇON DE GARNISSAGE**
VORRICHTUNG ZUM EINSETZEN EINES PACKUNGSABSCHNITTS
DEVICE FOR INSERTING A TRIM SECTION

(30) Priorité: 08.02.2022 FR 2201086
(43) Date de publication de la demande: 09.08.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BABINET, Cyrille, 94400 VITRY SUR SEINE (FR); GALLOPIN, Eric, 78350 JOUY EN JOSAS (FR); LEBAIN, Gilles, 94400 VITRY SUR SEINE (FR)
(74) Mandataire: Air Liquide

(56) Documents cités:
- DE-C1- 3 610 457
- JP-A- 2015 217 380
- JP-A- H01 242 102
- JP-A- H11 333 283
- JP-A- S5 794 340
- US-A- 2 604 220
- US-A1- 2010 063 304
- US-A1- 2014 126 981
- US-A1- 2021 245 099

## Description

La présente invention se rapporte au domaine des colonnes de séparation gaz/liquide et à leur assemblage et elle concerne plus particulièrement un dispositif d'insertion de tronçons de garnissage pour une colonne de séparation gaz/liquide dans une virole afin de former ces dites colonnes de séparation gaz/liquide.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation gaz/liquide comprend notamment une étape d'insertion d'une pluralité de tronçons de garnissage au sein d'une virole. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plusieurs bandes ondulées, sont souvent appelés "packs". Les tronçons de garnissage sont classiquement empilés les uns sur les autres, le cas échéant avec des séparateurs interposés, afin de participer à la séparation des composants du fluide sur la dimension axiale de la colonne.

Il est connu de procéder à l'insertion des tronçons de garnissage pour une colonne de séparation gaz/liquide au sein d'une virole maintenue verticale, la force de gravité facilitant grandement la progression du tronçon de garnissage inséré au sein de la virole. Un tel procédé peut toutefois s'avérer contraignant lorsque les colonnes de séparation gaz/liquide à assembler présentent un diamètre important et une dimension axiale nécessitant la mise en oeuvre de viroles de grande longueur, de l'ordre de plusieurs dizaines de mètres. En effet, de tels procédés avec une insertion verticale des tronçons de garnissage nécessitent alors un outillage apte à soulever les tronçons de garnissage sur une grande distance afin de les mettre en regard de l'extrémité de la virole ainsi qu'un site de production présentant une hauteur de plafond supérieure à la longueur de la virole. Le brevet JP-H01 -242102-A divulgue un dispositif d'insertion d'au moins un tronçon de garnissage au sein d'une virole cylindrique, comprenant une base pourvue de moyens d'accroche configurés pour agripper un tronçon de garnissage et disposés régulièrement autour d'un axe principal.

Il est donc souhaité, pour les viroles de longueur élevée, de prévoir un procédé d'assemblage dans lequel l'insertion des tronçons de garnissage est effectuée avec la virole agencée à l'horizontale. Une telle position rend difficile l'insertion des tronçons de garnissage du fait que ladite insertion nécessite une force de poussée considérable sur l'ensemble de la longueur de la virole, la gravité n'intervenant plus comme force d'accompagnement du mouvement du tronçon de garnissage au sein de la virole. Au contraire, la force de gravité tend à plaquer le tronçon de garnissage contre une partie de la virole de sorte que les forces de frottement entre la paroi annulaire de la virole et le pourtour périphérique du tronçon de garnissage ne sont pas homogènes, ce qui participe à empêcher une insertion linéaire et sans à-coups du tronçon de garnissage et ce qui peut potentiellement endommager le tronçon de garnissage lors de son insertion. De telles contraintes sont particulièrement apparentes lorsque les tronçons de garnissage ainsi que la virole présentent un diamètre de plusieurs mètres.

Dans ce contexte, la présente invention vise à faciliter l'insertion horizontale de tronçons de garnissage au sein d'une virole en proposant un dispositif d'insertion d'au moins un tronçon de garnissage pour une colonne de séparation gaz/liquide au sein d'une virole cylindrique, comprenant une base pourvue de moyens d'accroche configurés pour agripper un tronçon de garnissage et disposés régulièrement autour d'un axe principal, caractérisé en ce que le dispositif d'insertion comprend au moins deux dispositifs télescopiques solidaires de la base et au moins un moyen de poussée solidaire d'une extrémité de chacun des deux dispositifs télescopiques, les dispositifs télescopiques étant configurés pour se déployer et entraîner un déplacement du moyen de poussée.

Selon l'invention, le déploiement des dispositifs télescopiques participe à la poussée du tronçon de garnissage pour une colonne de séparation gaz/liquide et la pluralité de ces dispositifs participe à homogénéiser les forces de poussée pour éviter une concentration locale de contraintes dues aux forces de frottement tel qu'évoqué précédemment. Les dispositifs télescopiques sont configurés pour se déployer sur une longueur sensiblement égale à la longueur de la virole, la longueur de déploiement et la longueur de la virole étant ici considérées selon une direction parallèle à un axe de révolution de la virole.

Selon l'invention, le moyen de poussée est interposé entre l'extrémité des dispositifs télescopiques et le tronçon de garnissage. Le moyen de poussée permet de répartir les forces exercées par les dispositifs télescopiques sur toute la surface dudit moyen de poussée et donc d'augmenter la surface de contact entre le dispositif d'insertion et le tronçon de garnissage en cours d'insertion. La présence du moyen de poussée évite ainsi des forces exercées de manière trop locale par les extrémités des dispositifs télescopiques directement sur le tronçon de garnissage, et pouvant endommager ce dernier.

Le dispositif d'insertion participe donc à un garnissage d'une virole par une pluralité de tronçons de garnissage afin de former une colonne de séparation. La base du dispositif d'insertion, plus particulièrement les moyens d'accroche de celle-ci, sont aptes à agripper un tronçon de garnissage par les côtés de celui-ci. Les tronçons de garnissage présentant une forme circulaire pouvant aller jusqu'à 5m de diamètre, la base doit donc être dimensionnée de sorte à ce que les moyens d'accroche puissent agripper un tel tronçon de garnissage par les côtés. L'axe principal autour duquel sont disposés les moyens d'accroche peut par exemple passer par le centre du tronçon de garnissage et/ou être parallèle ou confondu avec l'axe de révolution de la virole. Une fois le tronçon de garnissage agrippé, ce dernier est positionné au niveau de l'entrée de la virole, et la poussée du tronçon de garnissage au sein de la virole, par l'intermédiaire des dispositifs télescopiques peut être mise en oeuvre.

Les dispositifs télescopiques sont au moins au nombre de deux afin d'éviter une unique poussée au niveau du centre du tronçon de garnissage qui ne permet pas de compenser correctement les forces de frottement au niveau de la périphérie du tronçon de garnissage par la paroi de la virole. D'une manière avantageuse, le dispositif d'insertion comprend au moins trois dispositifs télescopiques répartis de sorte à minimiser les forces de frottement exercées par la virole sur le tronçon de garnissage lors de la poussée. Le dispositif d'insertion selon l'invention est ainsi apte à assurer une poussée horizontale d'un tronçon de garnissage au sein d'une virole, tout en minimisant les forces de frottement exercées sur le tronçon de garnissage.

Selon une caractéristique de l'invention, les dispositifs télescopiques sont agencés de manière régulière autour de l'axe principal. La répartition régulière des dispositifs télescopiques évite une inégalité des compensations des forces de frottement exercées sur l'ensemble du tronçon de garnissage.

Selon une caractéristique de l'invention, les dispositifs télescopiques et les moyens d'accroche sont agencés sur un montant périphérique de la base. La base peut ainsi comprendre une pluralité de montants périphériques, tous agencés et répartis régulièrement autour de l'axe principal. Un montant périphérique peut ainsi être porteur d'un moyen d'accroche seul, d'un dispositif télescopique seul, ou bien des deux à la fois, l'essentiel étant que le moyen d'accroche et le dispositif télescopique ne créent pas d'interférence mécanique l'un envers l'autre pouvant nuire au bon déroulement de la fonction de l'un et/ou de l'autre.

Tout comme les dispositifs télescopiques, les moyens d'accroche sont préférentiellement régulièrement répartis autour de l'axe principal, et ce afin d'assurer une tenue optimale et sécurisée du tronçon de garnissage.

Selon une caractéristique de l'invention, chaque dispositif télescopique présente une force de poussée d'au moins 1t. Comme cela a été mentionné précédemment, les tronçons de garnissage présentent un diamètre pouvant aller jusqu'à 5m. Pousser des tronçons de garnissage d'une telle dimension au sein de la virole nécessite donc une force de poussée très importante. Les dispositifs télescopiques doivent donc être aptes à appliquer une telle force de poussée, préférentiellement une force poussée comprise entre 1t et 1,5t.

Selon une caractéristique de l'invention, les dispositifs télescopiques sont pilotés individuellement l'un par rapport à l'autre. Un pilotage individuel de chacun des dispositifs télescopiques peut s'avérer utile par exemple lorsqu'une force de frottement exercée sur le tronçon de garnissage est localement plus élevée. Une force de poussée peut alors être augmentée au niveau du dispositif télescopique le plus proche de la force de frottement considérée afin d'équilibrer les forces lors de l'insertion et rendre le déroulé de celle-ci optimal. Afin de déterminer s'il existe un déséquilibre au niveau des forces de frottement, chacun des dispositifs télescopiques peut par exemple comprendre un capteur de résistance permettant de mesurer les forces de frottement et d'ajuster la force de poussée de chacun des dispositifs télescopiques en conséquence.

Selon une caractéristique de l'invention, les dispositifs télescopiques peuvent être des actionneurs linéaires à chaine. A ce titre, chacun des dispositifs télescopiques peut comprendre un boitier, fixé sur un montant périphérique de la base et au sein duquel est enroulé une chaîne. Lorsque la poussée du tronçon de garnissage doit être effectuée, la chaîne se déroule dans le dispositif télescopique et c'est cette chaîne qui déploie ledit dispositif télescopique afin d'assurer la poussée du tronçon de garnissage. D'autres types de dispositifs télescopiques peuvent être utilisés, comme par exemple un vérin hydraulique ou pneumatique.

Selon une caractéristique de l'invention, le moyen de poussée est configuré pour être au contact du tronçon de garnissage pour une colonne de séparation gaz/liquide dans au moins une zone annulaire périphérique. La zone annulaire périphérique correspond à une zone virtuelle au niveau du tronçon de garnissage où le positionnement du moyen de poussée est optimal. La zone annulaire est dite périphérique car située à proximité d'un bord périphérique du tronçon de garnissage. C'est en effet au niveau de la périphérie du tronçon de garnissage que s'exercent les forces de frottement exercées par la paroi de la virole. L'extrémité des dispositifs télescopiques est donc préférentiellement située en regard de cette zone annulaire périphérique et le moyen de poussée qui participe à répartir l'effort de poussée des dispositifs télescopiques est préférentiellement également en regard de cette zone annulaire périphérique.

Selon une caractéristique de l'invention, le moyen de poussée présente une forme annulaire, une dimension radiale de la forme annulaire correspondant à une dimension radiale de la zone annulaire périphérique. Le moyen de poussée correspond donc à un anneau de poussée, et les dimensions de cet anneau de poussée sont telles qu'il est intégralement agencé au contact de la zone annulaire périphérique. L'anneau de poussée présente un diamètre inférieur ou égal au diamètre du tronçon de garnissage afin d'éviter toute interférence mécanique avec les parois de la virole. Le diamètre de l'anneau de poussée doit ici être considéré comme le diamètre externe, à savoir le diamètre le plus élevé dudit anneau de poussée. Une telle caractéristique permet que l'anneau de poussée ne s'étende pas radialement au-delà des dimensions du tronçon de garnissage.

Selon une caractéristique de l'invention, le dispositif d'insertion comprend un organe de maintien des dispositifs télescopiques, ledit organe de maintien reliant mécaniquement les dispositifs télescopiques entre eux. Les dispositifs télescopiques peuvent se déployer sur une longueur de plusieurs dizaines de mètres en fonction de la longueur de la virole. Malgré leur fixation aux montants périphériques d'une part et au moyen de poussée d'autre part, la potentielle longueur élevée résultant de leur déploiement associé à une force de poussée élevée peut entraîner un fléchissement des dispositifs télescopiques. L'organe de maintien stabilise les dispositifs télescopiques et tend à les maintenir dans l'axe de poussée, à égale distance les uns des autres. L'organe de maintien peut par exemple se présenter sous la forme d'une structure métallique reliant l'ensemble des dispositifs télescopiques. La forme de la structure métallique est dépendante du nombre de dispositifs télescopiques, par exemple une forme triangulaire si le dispositif d'insertion comprend trois dispositifs télescopiques.

L'invention couvre également un système d'insertion d'au moins un tronçon de garnissage au sein d'une virole cylindrique, comprenant une structure porteuse et un dispositif d'insertion tel que décrit précédemment, le dispositif d'insertion étant porté par la structure porteuse de sorte à ce que les dispositifs télescopiques soient aptes à se déployer selon une direction horizontale. Le système d'insertion dans son ensemble assure des fonctions supplémentaires comme le déplacement du dispositif d'insertion. Le système d'insertion permet d'enchaîner l'insertion d'une pluralité de tronçons de garnissage.

La structure porteuse se présente sous la forme d'un portique apte à se déplacer selon au moins une direction tout en portant le dispositif d'insertion agrippant un tronçon de garnissage. Pour opérer un tel déplacement, la structure porteuse peut par exemple être agencé sur des rails afin que le déplacement se fasse selon la direction la plus précise possible.

Tel que cela a été évoqué, l'objectif du système d'insertion selon l'invention est d'insérer des tronçons de garnissage au sein d'une virole agencée horizontalement. Le système d'insertion est donc configuré pour que les dispositifs télescopiques soient aptes à se déployer selon une direction horizontale afin d'assurer une insertion horizontale des tronçons de garnissage.

Selon une caractéristique de l'invention, le dispositif d'insertion est apte à effectuer dans son ensemble un mouvement de translation de manière relative à la structure porteuse. Indépendamment de la structure porteuse, le dispositif d'insertion peut se déplacer par exemple de manière verticale. Ce déplacement vertical est utile par exemple pour positionner le dispositif d'insertion à l'aplomb d'une pile de tronçons de garnissage, puis pour le descendre dans le but d'agripper le tronçon de garnissage disposé au sommet de la pile. Le déplacement vertical du dispositif d'insertion par rapport à la structure porteuse est également utile dans le but d'ajuster la position du tronçon de garnissage agrippé afin de positionner correctement celui-ci à l'entrée de la virole et ainsi de favoriser la poussée du tronçon de garnissage au sein de la virole. Le déplacement relatif du dispositif d'insertion par rapport à la structure porteuse peut par exemple se faire à l'aide d'un moteur embarqué sur la structure porteuse et configuré pour déplacer un élément porteur du dispositif d'insertion le long de la structure porteuse.

Selon une caractéristique de l'invention, le dispositif d'insertion est apte à effectuer dans son ensemble une rotation de manière relative à la structure porteuse. La rotation permet notamment de basculer le dispositif d'insertion, avec une structure porteuse qui reste fixe, entre une position où le dispositif d'insertion est agencé de manière verticale dans le but d'agripper un tronçon de garnissage sur une pile verticale de tronçons de garnissage, et une position où le dispositif d'insertion est agencé de manière horizontale dans le but de procéder à l'insertion du tronçon de garnissage agrippé au sein de la virole. Les éléments de rotation doivent donc être configurés pour permettre une rotation du dispositif d'insertion d'environ 90°, afin que le dispositif d'insertion puisse basculer entre les positions verticales et horizontales évoquées précédemment. La rotation relative du dispositif d'insertion par rapport à la structure porteuse peut par exemple se faire à l'aide d'un moteur apte à piloter un système à engrenages entraînant la rotation du dispositif d'insertion, ou bien encore via un système à chaîne ou un système hydraulique.

L'invention couvre également un procédé d'insertion d'au moins un tronçon de garnissage au sein d'une virole cylindrique mis en oeuvre par un système d'insertion tel que décrit précédemment, comprenant :
- une étape d'agrippement d'un tronçon de garnissage par les moyens d'accroche du dispositif d'insertion,
- une étape de rotation dans son ensemble du dispositif d'insertion par rapport à la structure porteuse,
- une étape de déplacement du système d'insertion jusqu'à la virole grâce à la structure porteuse,
- une étape de positionnement du tronçon de garnissage au niveau d'une entrée de la virole,
- une étape de poussée du tronçon de garnissage au sein de la virole par un mouvement de translation des dispositifs télescopiques et du moyen de poussée par rapport à la base.

Les étapes du procédé se font à l'aide des différents éléments évoqués précédemment du système d'insertion. Ainsi, l'étape d'agrippement se fait à l'aide des moyens d'accroche du dispositif d'insertion et des moyens de mise en translation du dispositif d'insertion par rapport à la structure porteuse, l'étape de rotation à l'aide des éléments de rotation embarqués sur la structure porteuse, l'étape de déplacement via la structure porteuse, l'étape de positionnement à l'aide des moyens de mise en translation du dispositif d'insertion par rapport à la structure porteuse, et l'étape de poussée à l'aide des dispositifs télescopiques et du moyen de poussée. Il convient de noter qu'il s'agit ici d'une liste d'étapes non exhaustive pour le bon déroulement du procédé d'insertion de tronçons de garnissage au sein de la virole selon l'invention. A titre d'exemple non limitatif, on pourra prévoir dans le procédé selon l'invention une étape de contrôle du bon positionnement du tronçon de garnissage une fois inséré dans la virole. Cette étape additionnelle, venant ici à la suite de l'étape de poussée, consiste alors en une vérification et un enregistrement de la bonne position du tronçon de garnissage qui vient d'être inséré, à l'aide d'un appareil de mesure précis au millimètre.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig. 1] est une vue générale du système d'insertion de tronçons de garnissage comprenant un dispositif d'insertion selon l'invention, lors de l'agrippement d'un tronçon de garnissage,
[Fig. 2] est une vue générale du système d'insertion de tronçons de garnissage lors de l'insertion d'un tronçon de garnissage au sein d'une virole,
[Fig. 3] représente en détails un dispositif télescopique du système d'insertion,
[Fig. 4] représente une étape d'agrippement d'un tronçon de garnissage d'un procédé d'insertion de tronçons de garnissage,
[Fig. 5] représente une étape de rotation du dispositif d'insertion et de déplacement du système d'insertion du procédé d'insertion de tronçons de garnissage,
[Fig. 6] représente une étape d'insertion du tronçon de garnissage du procédé d'insertion de tronçons de garnissage,
[Fig. 7] est une vue de détails d'un moyen de poussée du système d'insertion et d'un tronçon de garnissage contre lequel le moyen de poussée est destiné à être en contact.

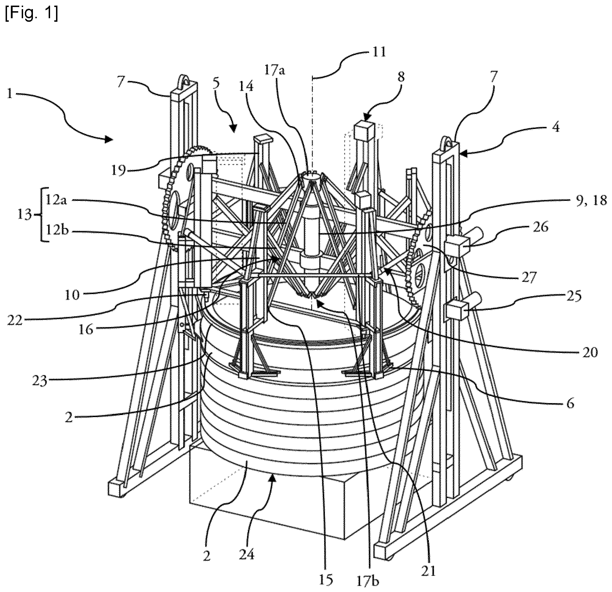

La figure 1 représente un système d'insertion 1 horizontale de tronçons de garnissage 2 au sein d'une virole dans le but de former une colonne de séparation gaz/liquide. De telles colonnes de séparation se présentent par exemple sous une forme cylindrique à section circulaire ou sensiblement circulaire. Les colonnes de séparation peuvent présenter une dimension principale de plusieurs dizaines de mètres et une section cylindrique de plusieurs mètres. Les tronçons de garnissage 2 amenés à être insérés au sein de ces colonnes de séparation peuvent présenter une section circulaire ou sensiblement circulaire d'un diamètre de l'ordre de 2,5m à 5m.

Pour des raisons d'encombrement mécanique en termes de hauteur rendant impossible l'opération d'insertion lorsque la virole est agencée verticalement, ladite opération est ici effectuée avec la virole en position horizontale, l'insertion des tronçons de garnissage 2 se faisant également selon une direction horizontale.

Le système d'insertion 1 de tronçons de garnissage 2 selon l'invention permet d'opérer un procédé d'insertion desdits tronçons de garnissage 2 au sein de la virole, bien que celle-ci soit en position horizontale et de ce fait puisse entraîner des contraintes mécaniques. Un tel système d'insertion 1 permet notamment d'agripper un tronçon de garnissage 2 sur une pile 24 verticale de tronçons de garnissage tel que cela est illustré sur la figure 1. Le système d'insertion 1 permet par la suite d'effectuer une rotation afin d'agencer le tronçon de garnissage 2 en regard d'une entrée de la virole, de se déplacer jusqu'à l'entrée de la virole, puis de pousser le tronçon de garnissage 2 jusqu'au fond de la virole ou contre un autre tronçon de garnissage 2 déjà inséré au sein de la virole, en assurant une avancée la plus fluide possible, c'est-à-dire avec le moins d'à-coups possible, du tronçon de garnissage 2 au sein de la virole.

Pour ce faire, le système d'insertion 1 comprend une structure porteuse 4, ainsi qu'un dispositif d'insertion 5 agencé sur la structure porteuse 4, et comprenant notamment des moyens d'accroche 6 permettant d'agripper les tronçons de garnissage 2. La structure porteuse 4 se présente sous la forme d'un portique comprenant deux piliers 7 entre lesquels repose le dispositif d'insertion 5. La structure porteuse 4 peut par exemple être montée sur rails afin que le système d'insertion 1 puisse opérer un déplacement linéaire entre la pile 24 de tronçons de garnissage 2 et la virole.

Le système d'insertion 1 comprend par ailleurs un premier moteur 25 permettant au dispositif d'insertion 5 d'effectuer dans son ensemble un mouvement de translation par rapport à la structure porteuse 4. Le système d'insertion 1 comprend également un deuxième moteur 26 permettant d'actionner un système d'engrenages 27 permettant de déplacer le dispositif d'insertion 5 dans son ensemble de sorte à effectuer une rotation de manière relative à la structure porteuse 4. Cette rotation permet de faire passer le dispositif d'insertion d'une position verticale à une position horizontale, de manière à pouvoir agencer le tronçon de garnissage 2 en regard de l'entrée de la virole tel que mentionné précédemment.

Le dispositif d'insertion 5 comprend une base 8 portée par la structure porteuse 4 et pourvue des moyens d'accroche 6 permettant au dispositif d'insertion 5 d'agripper un tronçon de garnissage 2, et ce peu importe le diamètre dudit tronçon de garnissage 2. Sur la figure 1, les moyens d'accroche 6 sont au nombre de six.

La base 8 comprend un montant principal 9 et une pluralité de montants périphériques 10 parallèles au montant principal 9. Le montant principal 9 s'étend principalement selon un axe principal 11 passant par le centre ou sensiblement par le centre du tronçon de garnissage 2 agrippé. Les montants périphériques 10 sont agencés de manière circonférentielle et régulière autour du montant principal 9. C'est au niveau des montants périphériques 10 que sont agencés les moyens d'accroche 6 évoqués précédemment. La base 8 comprend au moins deux montants périphériques 10. D'une manière avantageuse, et tel que cela est illustré sur la figure 1, la base 8 comprend au moins six montants périphériques 10. Une telle base 8 permet d'agripper un tronçon de garnissage 2 d'un diamètre défini.

D'une manière alternative, la base 8 peut être apte à se déployer pour couvrir une pluralité de diamètres de tronçon de garnissage 2. Pour ce faire, chaque montant périphérique 10 peut être mécaniquement relié au montant principal 9 par deux branches 12 formant un duo de branches 13. Chacune des deux branches 12 comprend une première extrémité 14 liée au montant principal 9, et une deuxième extrémité 15 liée au montant périphérique 10. De plus, les deux branches 12 du duo de branches 13 sont sécantes entre elles et sont liées entre elles au niveau de leur point d'intersection, c'est-à-dire sensiblement en leur centre, par une liaison pivot 16. Le montant principal 9 comprend deux bagues fixes 17, chacune des bagues fixes 17 étant agencée au niveau de chaque portion terminale dudit montant principal 9. Le montant principal 9 comprend un corps télescopique 18 apte à modifier une dimension principale du montant principal 9. Ainsi, en modifiant la longueur du montant principal 9, il est possible d'augmenter ou de réduire la distance entre les deux bagues fixes 17. La longueur du montant principal 9 peut être réglée de manière manuelle ou via un organe de contrôle non représenté. Le corps télescopique 18 permet de modifier la longueur du montant principal 9 en déployant ou rétractant au moins l'une des portions terminales de celui-ci.

La première extrémité 14 de chaque branche 12 du duo de branches 13 reliant le montant principal 9 à l'un des montants périphériques 10 est plus particulièrement liée à l'une des bagues fixes 17 agencées sur le montant principal 9. Chaque duo de branches 13 comprend ainsi une première branche 12a dont la première extrémité 14 est liée à une première bague fixe 17a, et une deuxième branche 12b dont la première extrémité 14 est liée à une deuxième bague fixe 17b. La deuxième extrémité 15 des deux branches 12 est quant à elle fixée sur le montant périphérique 10 et au moins l'une d'entre elles peut coulisser le long de celui-ci, par exemple à l'aide d'une glissière 19 formée au niveau de l'une des faces du montant périphérique 10.

Ainsi, lorsque la longueur du montant principal 9 est modifiée grâce au corps télescopique 18, la distance entre les bagues fixes 17 et donc la distance entre les premières extrémités 14 de chacune des deux branches 12 sont également modifiées. Les branches 12 étant reliées en un point formant liaison pivot 16, ce point tend à se rapprocher ou s'éloigner du montant principal 9 en fonction de l'écartement ou du rapprochement l'une de l'autre des premières extrémités 14. Le mouvement du corps télescopique 18 entraîne de la sorte une modification de l'inclinaison des branches 12 de chacun des duos de branches 13 et modifie ainsi la distance radiale entre le montant principal 9 et les montants périphériques 10.

La base 8 a donc comme fonction de modifier une distance radiale entre le montant principal 9 et chacun des montants périphériques 10, les moyens d'accroche 6 pour agripper le tronçon de garnissage étant agencés sur lesdits montants périphériques 10. Les moyens d'accroche 6 peuvent ainsi être écartés pour pouvoir être en prise autour de tronçons de garnissage 2 de différents diamètres. Plus la longueur du montant principal 9 est élevée, plus les bagues fixes 17 sont éloignées l'une par rapport à l'autre, et plus les montants périphériques 10 sont proches du montant principal 9, adaptant le dispositif d'insertion 5 à un petit diamètre de tronçon de garnissage 2. A l'inverse, plus la longueur du montant principal 9 est faible, plus les bagues fixes 17 sont rapprochées l'une par rapport à l'autre, et plus les montants périphériques 10 sont éloignés du montant principal 9, adaptant le dispositif d'insertion 5 à un grand diamètre de tronçon de garnissage 2. La base 8 telle qu'elle vient d'être évoquée permet donc d'adapter le dispositif d'insertion 5 à une pluralité de diamètres de tronçons de garnissage 2 et de viroles.

Une fois la distance radiale souhaitée établie, celle-ci peut être figée par un moyen de verrouillage 20. Le moyen de verrouillage 20 peut par exemple être associé à une pluralité de tiges déployables 21 s'étendant entre deux montants périphériques 10 adjacents, tel que cela est illustré sur la figure 1.

Avec une base 8 apte à se déployer tel que décrit précédemment, les moyens d'accroche 6 peuvent être réglés pour correctement saisir le tronçon de garnissage 2, et ce peu importe le diamètre de celui-ci.

Du fait de la prise du tronçon de garnissage 2 par la tranche, associé au fait que les tronçons de garnissage 2 présentent une forme cylindrique à section circulaire ou sensiblement circulaire, les moyens d'accroche 6 présentent une forme d'arc de cercle, et ce afin que l'ensemble du moyen d'accroche 6 destiné à être au contact du tronçon de garnissage 2 épouse un rayon de courbure de celui-ci. L'agrippement du tronçon de garnissage 2 est ainsi facilité et plus stable. Afin que l'agrippement du tronçon de garnissage 2 par les moyens d'accroche 6 soit optimal, la courbure de l'arc de cercle formé par les moyens d'accroche 6 est réglable afin de s'adapter à tous diamètres de tronçons de garnissage 2.

Après agrippement du tronçon de garnissage 2 par les moyens d'accroche 6, ces derniers peuvent être pilotés de manière individuelle l'un par rapport à l'autre dans le but de pousser sur un point précis du tronçon de garnissage 2 et déformer localement ce dernier. Une telle déformation locale peut être préconisée lorsqu'un différentiel de forme existe entre le tronçon de garnissage 2 et la virole au sein de laquelle le tronçon de garnissage 2 est destiné à être inséré. La déformation locale permet ainsi de modifier légèrement la forme du tronçon de garnissage 2 afin que celui-ci puisse par la suite être inséré dans la virole de manière plus aisée.

Au moins deux des montants périphériques 10 sont pourvus de dispositifs télescopiques 22. Les dispositifs télescopiques 22 peuvent être agencés sur un montant périphérique 10 également pourvu d'un moyen d'accroche 6, l'essentiel étant que l'ensemble de ces éléments n'interfèrent pas mécaniquement les uns par rapport aux autres. Les dispositifs télescopiques 22 permettent d'opérer une poussée du tronçon de garnissage 2 une fois celui-ci mis en place en regard de la virole. Cette poussée est effectuée dès lors que les moyens d'accroche 6 ont été commandés pour lâcher le tronçon de garnissage 2. Les dispositifs télescopiques 22 se déploient afin de pousser le tronçon de garnissage 2 jusqu'au bout de la virole, et ce peu importe la longueur de cette dernière. Si un ou plusieurs tronçons de garnissage 2 ont déjà été précédemment insérés dans la virole, les dispositifs télescopiques poussent le tronçon de garnissage 2 jusqu'à ce que ce dernier soit au contact du tronçon de garnissage 2 précédemment inséré. Les dispositifs télescopiques 22 peuvent être intégrés à la base 8 précédemment décrite. Sur la figure 1, le dispositif d'insertion 5 étant en train d'agripper un tronçon de garnissage 2 sur la pile 24, les dispositifs télescopiques 22 sont donc repliés.

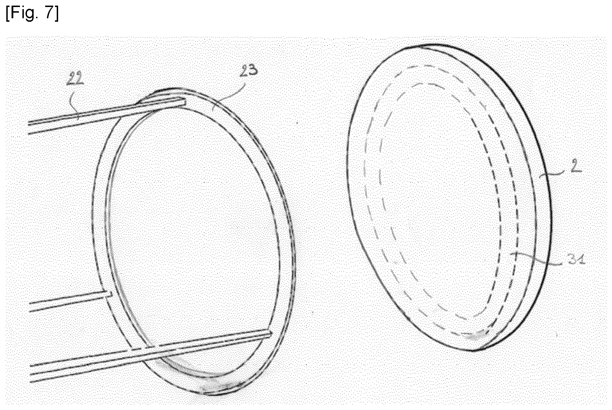

Afin que l'insertion du tronçon de garnissage 2 au sein de la virole soit effectuée de manière uniforme, avec le minimum d'à-coups, le dispositif d'insertion 5 comprend un moyen de poussée 23 fixé à l'extrémité de chaque dispositif télescopique 22, tel que cela est plus particulièrement visible sur la figure 7, ce moyen de poussé étant destiné à être en contact direct avec le tronçon de garnissage 2 au cours de l'insertion. Le moyen de poussée 23 répartit mécaniquement les forces exercées par chacun des dispositifs télescopiques 22 en appuyant sur tout le pourtour du tronçon de garnissage 2, de manière à éviter la localisation des forces uniquement au niveau de l'extrémité des dispositifs télescopiques 22. Le moyen de poussée 23 permet ainsi d'éviter d'endommager le tronçon de garnissage 2 inséré à cause d'une force de poussée localisée. Lorsque les dispositifs télescopiques 22 sont repliés, le moyen de poussée 23 est disposé au voisinage des montants périphériques 10.

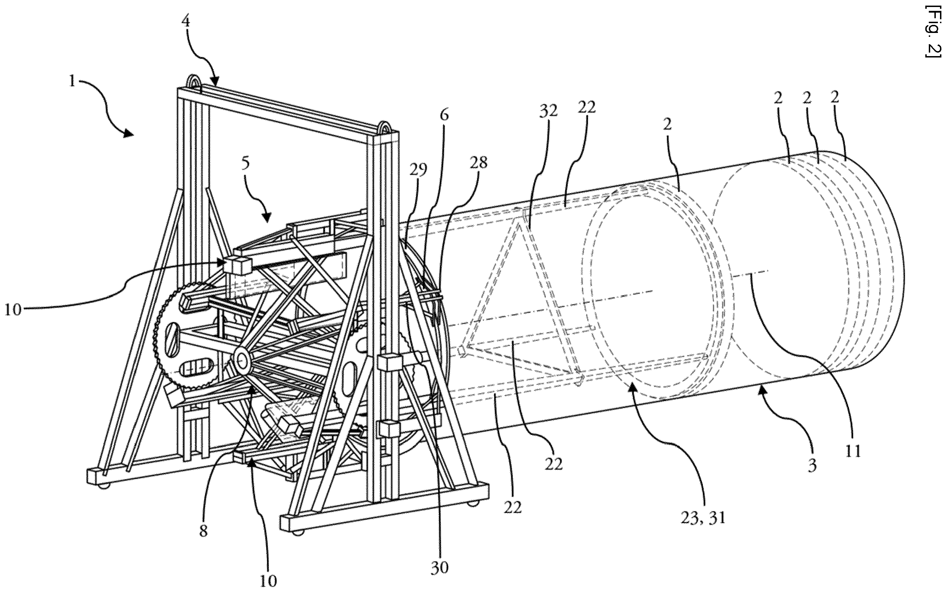

La figure 2 représente le système d'insertion tel qu'illustré sur la figure 1 mais lors d'une étape d'insertion du tronçon de garnissage 2 au sein de la virole 3. Sur la figure 2, les dispositifs télescopiques 22 sont donc déployés. Sur les figures 1 et 2, le dispositif d'insertion 5 comprend six montants périphériques 10 dont trois d'entre eux sont pourvus de dispositifs télescopiques 22. La répartition des dispositifs télescopiques 22 est effectuée de manière régulière autour de l'axe principal 11.

Le système d'insertion 1 est structuré de sorte à ce que les dispositifs télescopiques 22 puissent se déployer selon la direction horizontale, et ce afin d'opérer l'étape d'insertion au sein de la virole 3 agencée à l'horizontale. Autrement dit, les dispositifs télescopiques 22 sont aptes à se déployer de manière parallèle à l'axe principal 11 et à un axe d'allongement des montants périphériques 10.

La figure 2 permet également d'observer qu'au moins deux montants périphériques 10 comprennent chacun un crochet 28. Lorsque le dispositif d'insertion 5 est disposé à proximité de la virole 3 dans le but d'y insérer par la suite un tronçon de garnissage 2, les crochets 28 viennent se refermer sur la virole 3, par exemple sur une collerette 29 s'étendant de manière circonférentielle autour de la virole 3 au niveau de l'extrémité de la virole 3 par laquelle les tronçons de garnissage 2 sont insérés. Les crochets 28 assurent ainsi un maintien mécanique de la virole 3 en regard du dispositif d'insertion 5, y compris pendant l'insertion du tronçon de garnissage 2 au sein de la virole 3. La présence de ces crochets 28 permet d'effectuer un contrepoids suffisant pour retenir la virole 3 malgré les forces exercées sur celle-ci lors de l'insertion des tronçons de garnissage 2. Les crochets 28 évitent ainsi la présence d'un encombrant contrepoids disposé à l'arrière de la virole 3 pour bloquer celle-ci lors de la poussée du tronçon de garnissage 2.

Afin de pouvoir se refermer sur la collerette 29 de la virole 3, les crochets 28 doivent s'étendre le long de chacun des montants périphériques 10, au-delà des moyens d'accroche 6 également portés par les montants périphériques 10. Cette extension peut créer une gêne mécanique lorsque les moyens d'accroche 6 agrippent un tronçon de garnissage 2 sur la pile de tronçons de garnissage tel qu'illustré sur la figure 1, particulièrement lorsque le dernier tronçon de garnissage 2 de la pile est agrippé, les crochets 28 pouvant faire butée sur le sol. Pour pallier cela, chacun des crochets 28 est monté sur un vérin rétractable 30 afin d'escamoter les crochets 28 et d'éviter toute contrainte mécanique liée à un crochet 28 déployé. Les crochets 28 sont ainsi mobiles entre une position escamotée, notamment lorsque le dispositif d'insertion 5 est en position verticale pour agripper les tronçons de garnissage 2 et une position déployée permettant de fixer le dispositif d'insertion 5 à la virole 3 au moment où le tronçon de garnissage 2 agrippé est maintenu au niveau de l'extrémité de la virole 3. Lorsque les crochets 28 sont en position déployée, ceux-ci sont configurés pour éviter toute interférence mécanique avec le moyen d'accroche 6 disposé sur le même montant périphérique 10. Afin d'éviter lesdites interférences mécaniques, les crochets 28 peuvent présenter une forme particulière et/ou s'escamoter et s'étendre en pivotant autour du montant périphérique 10 considéré, le pivotement se faisant à l'opposé du montant principal afin de ne pas entrer en contact avec le moyen d'accroche 6.

Afin de procéder à l'insertion de tronçons de garnissage 2 pouvant atteindre des diamètres conséquents, chacun des dispositifs télescopiques 22 présente une force de poussée d'au moins 1t. Cette force de poussée est répartie sur tout le pourtour du tronçon de garnissage 2 à l'aide du moyen de poussée 23.

Les dispositifs télescopiques 22 se déploient au moment où le tronçon de garnissage 2 est positionné en regard de l'entrée de la virole 3. Lorsque l'insertion du tronçon de garnissage 2 est initiée, le moyen de poussée 23 est entraîné par le déploiement des dispositifs télescopiques 22 et vient au contact du tronçon de garnissage 2. La zone de contact du moyen de poussée 23 au niveau du tronçon de garnissage 2 correspond au moins à une zone annulaire périphérique 31 rapportée sur le tronçon de garnissage 2 poussé. La zone annulaire périphérique 31 est ainsi en regard d'une périphérie du tronçon de garnissage 2, c'est-à-dire au voisinage d'un bord du tronçon de garnissage 2. Les dimensions du moyen de poussée 23 sont telles que le moyen de poussée 23 ne s'étend pas radialement au-delà du diamètre du tronçon de garnissage 2 poussé, afin de ne pas interférer mécaniquement avec une paroi de la virole 3. On comprend ainsi que la zone annulaire périphérique 31 est intégralement comprise dans l'aire d'une face du tronçon de garnissage 2, correspondant à la face au contact du moyen de poussée 23.

Lors de la poussée du tronçon de garnissage 2, la force exercée par les dispositifs télescopiques 22, et par analogie par le moyen de poussée 23, est préférentiellement localisée au niveau de la périphérie du tronçon de garnissage 2 car c'est au niveau de la périphérie que les forces opposées à la poussée se manifestent, notamment les forces de frottement du tronçon de garnissage 2 contre les parois de la virole 3. La poussée effectuée au niveau de la zone annulaire périphérique 31 permet donc de compenser les forces de frottements exercées sur le tronçon de garnissage 2 lors de l'insertion de celui-ci au sein de la virole 3. La compensation des forces de frottement est particulièrement efficace avec le dispositif d'insertion 5 selon l'invention car le moyen de poussée 23 est agencé au plus proche de la localisation de ces forces de frottement. Tel que cela est illustré sur la figure 2, le moyen de poussée 23 présente avantageusement une forme annulaire dont la dimension radiale correspond à la dimension de la zone annulaire périphérique 31 du tronçon de garnissage 2.

Dans le cas où la base 8 est configurée pour se déployer radialement et s'adapter à différents diamètres de tronçon de garnissage 2, plusieurs moyens de poussée 23 de dimensions différentes sont conçus et l'installation du moyen de poussée 23 adéquat est effectuée après la détermination de la distance radiale entre le montant principal et les montants périphériques 10.

Malgré la répartition régulière des dispositifs télescopiques 22 et la présence du moyen de poussée 23, il est possible qu'une force de frottement exercée sur le tronçon de garnissage 2 en cours d'insertion soit plus intense localement. Cette force de frottement localisée peut être due à la position horizontale de la virole 3 et/ou celle du tronçon de garnissage 2. La gravité peut effectivement entraîner un contact plus appuyé du tronçon de garnissage 2 contre la paroi de la virole 3, provoquant ainsi une dissymétrie des forces conséquentes au contact du tronçon de garnissage 2 contre la virole 3. D'autres facteurs générant une force de frottement localisée peuvent entrer en compte, comme par exemple un état de surface de la paroi de la virole 3 ou un état de surface de la tranche du tronçon de garnissage 2. Afin d'équilibrer la force de poussée, chaque dispositif télescopique 22 peut être contrôlé individuellement l'un par rapport à l'autre afin d'intensifier l'une ou l'autre des forces de poussée de manière à compenser une force de frottement locale élevée. Afin de détecter ces forces de frottement locales, chaque extrémité de chaque dispositif télescopique 22 peut par exemple comprendre un capteur de résistance mesurant les forces de frottement et donc apte à détecter une force de frottement élevée.

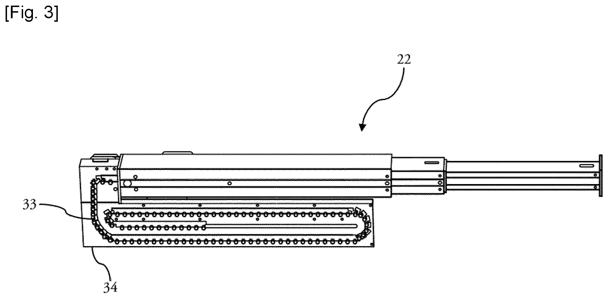

Lorsque les dispositifs télescopiques 22 se déploient pour pousser le tronçon de garnissage 2 au sein d'une virole 3 présentant une longueur importante, par exemple plusieurs dizaines de mètres, les dispositifs télescopiques 22 se déploient jusqu'à atteindre une longueur conséquente pouvant nuire à leur stabilité. Le dispositif d'insertion 5 peut donc comprendre un organe de maintien 32 relié à l'ensemble des dispositifs télescopiques 22 et agencé de sorte à être sensiblement à égale distance entre le moyen de poussée 23 et l'entrée de la virole 3. L'organe de maintien 32 a pour fonction de maintenir la position de chacun des dispositifs télescopiques 22 ainsi que la distance entre chacun d'entre eux. L'organe de maintien 32 participe donc à la répartition des forces exercées sur le tronçon de garnissage 2 inséré. L'organe de maintien 32 assure également la stabilité des dispositifs télescopiques 22, en évitant de potentielles flexions de ces derniers pouvant survenir en cas d'extension à une longueur élevée desdits dispositifs télescopiques 22. Tel que cela est illustré en figure 2, l'organe de maintien 32 présente une forme triangulaire afin de maintenir trois dispositifs télescopiques 22 équitablement répartis autour de l'axe principal 11. La forme de l'organe de maintien 32 peut toutefois varier en fonction du nombre de dispositifs télescopiques 22 inclus dans le dispositif d'insertion 5. Dans une variante non représentée, l'organe de maintien 32 peut comporter un jeu de roulettes, disposées chacune dans le prolongement des branches de l'organe de maintien, au-delà des dispositifs télescopiques, qui sont respectivement au contact de la face interne de la paroi périphérique de la virole. On vise alors à assurer un guidage continu de l'organe de maintien au sein de la virole lors du déploiement des dispositifs télescopiques et l'insertion d'un tronçon de garnissage. Ce guidage continu, par contact d'au moins une des roulettes contre la virole, permet de faciliter l'insertion malgré le poids de l'ensemble formé par les bras télescopiques et le moyen de poussée 23 qui pourrait amener l'ensemble à se désaxer. De manière alternative ou complémentaire, le moyen de poussée peut également comporter une ou plusieurs roulettes agencées en périphérie pour être au contact de la face interne de la paroi tubulaire de la virole lors de l'insertion des tronçons de garnissage au sein de la virole. La figure 3 est une représentation détaillée d'un dispositif télescopique 22 intégré au dispositif d'insertion décrit précédemment. Le dispositif télescopique 22 peut par exemple être un actionneur linéaire à chaine. Autrement dit, le dispositif télescopique 22 comprend une chaine 33 enroulée au sein d'un boitier 34 lorsque ledit dispositif télescopique 22 est replié.

Lorsque les dispositifs télescopiques 22 doivent être déployés, la chaine 33 se déroule et se rigidifie au sein du dispositif télescopique 22 afin de déployer celui-ci. Le déroulement de la chaine 33 est mis en oeuvre tant que le dispositif télescopique 22 peut exercer sa force de poussée sur le tronçon de garnissage. Une fois le tronçon de garnissage inséré jusqu'au fond de la virole ou contre un autre tronçon de garnissage précédemment inséré, la chaine 33 s'enroule au sein du boitier 34 afin de rétracter le dispositif télescopique 22. La rétractation de chacun des dispositifs télescopiques 22 du dispositif d'insertion se fait de manière simultanée afin que le moyen de poussée puisse être retiré de la virole sans interférence mécanique.

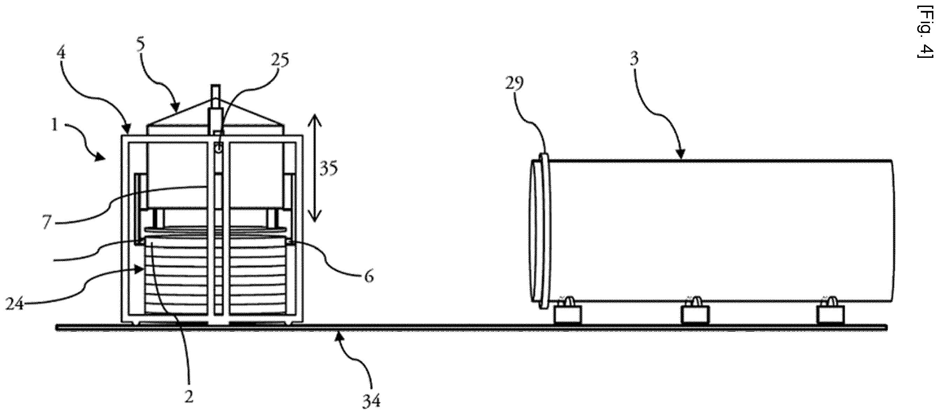

Les figures 4 à 6 illustrent schématiquement un exemple de déroulé du procédé d'insertion d'un tronçon de garnissage 2 selon l'invention.

Comme cela a été décrit précédemment, c'est le système d'insertion 1 dans son ensemble, c'est-à-dire le dispositif d'insertion 5 et la structure porteuse 4, qui permet de mettre en oeuvre le procédé d'insertion. Ainsi, la figure 4 représente notamment une étape d'agrippement d'un tronçon de garnissage 2 sur la pile 24 verticale de tronçons de garnissage 2. Pour cela, le système d'insertion 1 peut se déplacer dans son ensemble jusqu'à la pile 24 de tronçons de garnissage, par exemple à l'aide de rails 34 tel qu'évoqué précédemment.

Le dispositif d'insertion 5 est apte à effectuer dans son ensemble un mouvement de translation 35 par rapport à la structure porteuse 4, par exemple une translation le long des piliers 7 de manière verticale, c'est-à-dire de manière parallèle auxdits piliers 7. Ce mouvement de translation 35 peut être assurée par exemple par le premier moteur 25 actionné à distance. Ce mouvement de translation 35 est par exemple utilisé afin que le dispositif d'insertion 5 atteigne le sommet de la pile 24 verticale de tronçons de garnissage 2 et surplombe celui-ci, tel que cela est illustré sur la figure 4. Ceci étant fait, et une fois la structure porteuse 4 disposée autour de la pile 24 verticale de tronçons de garnissage 2, le mouvement de translation 35 permet de rapprocher le dispositif d'insertion 5 de la pile 24 de tronçons de garnissage 2 afin d'agripper le tronçon de garnissage 2 au sommet de ladite pile 24 via les moyens d'accroche 6. Une fois qu'un tronçon de garnissage 2 est agrippé, le dispositif d'insertion 5 est de nouveau déplacé de manière verticale afin de soulever le tronçon de garnissage 2 agrippé.

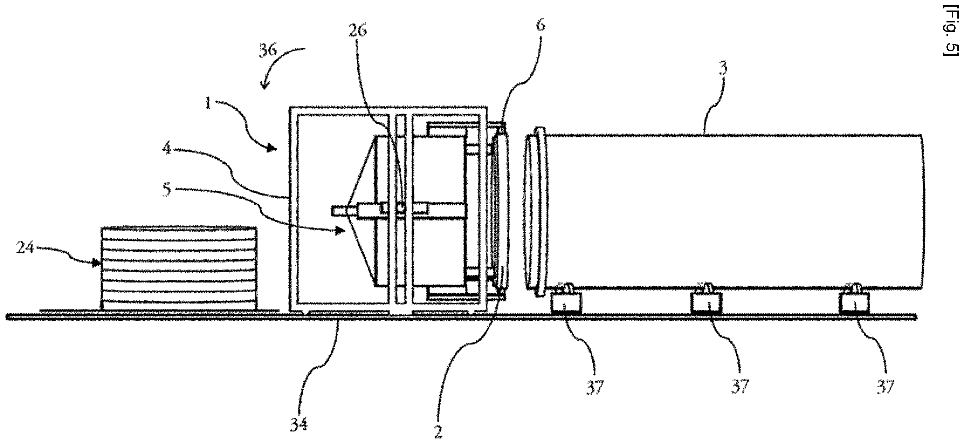

La figure 5 illustre une étape de rotation du dispositif d'insertion 5 et une étape de déplacement du système d'insertion 1 jusqu'à la virole 3. Ces deux étapes surviennent après qu'un tronçon de garnissage 2 a été agrippé par les moyens d'accroche 6. Pour assurer l'étape de rotation du dispositif d'insertion 5 par rapport à la structure porteuse 4, le dispositif d'insertion 5 comprend des moyens de mise en rotation, ici via le système d'engrenages illustré sur la figure 1, assurant au moins une rotation 36 à 90° ou sensiblement 90° du dispositif d'insertion 5 par rapport à la structure porteuse 4. Le deuxième moteur 26 peut être porté par la structure porteuse 4 et piloté de sorte que l'arbre de sortie moteur actionne le système d'engrenages et donc la rotation 36 du dispositif d'insertion 5 par rapport à la structure porteuse 4. Ce dispositif de rotation entraîné par le deuxième moteur 26 permet ainsi au dispositif d'insertion 5 de basculer entre une première position dite verticale, permettant d'agripper les tronçons de garnissage 2 sur la pile 24 de tronçons de garnissage 2 tel que cela est illustré en figure 4, et une deuxième position dite horizontale afin d'agencer le tronçon de garnissage 2 agrippé en regard de la virole 3 horizontale tel que cela est illustré sur la figure 5.

Par la suite, la structure porteuse 4 peut se déplacer tout en portant le dispositif d'insertion 5 dans le but de rapprocher le tronçon de garnissage 2 agrippé de la virole 3 afin de l'y insérer, par exemple grâce aux rails 34 tel qu'évoqué précédemment. Afin de stabiliser la virole 3, celle-ci peut être disposée sur des appuis 37.

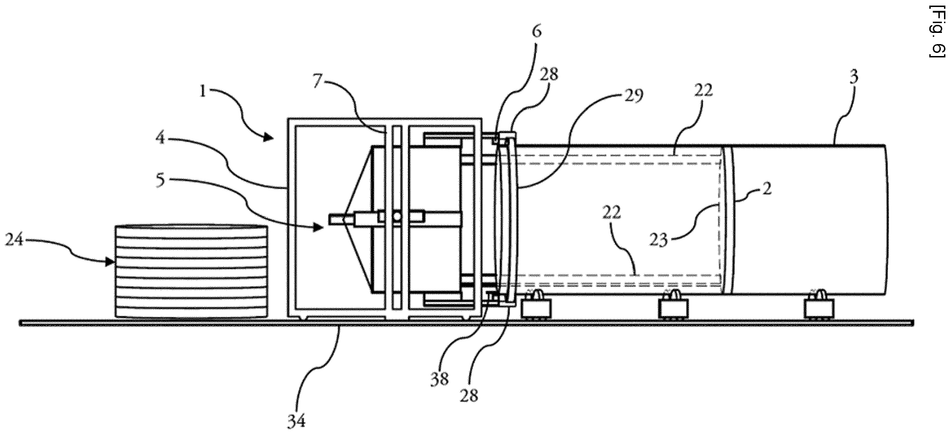

La figure 6 illustre l'étape de positionnement du dispositif d'insertion 5 à l'entrée de la virole 3 ainsi que l'étape de poussée du tronçon de garnissage 2 au sein de la virole 3. Afin de positionner correctement le tronçon de garnissage 2 à l'entrée de la virole 3, la position verticale du dispositif d'insertion 5 peut éventuellement être ajustée grâce au mouvement de translation vertical le long des piliers 7 de la structure porteuse 4 afin que le tronçon de garnissage 2 agrippé soit parfaitement en regard de l'entrée de la virole 3. Ceci étant fait, les crochets 28 viennent se refermer sur la collerette 29 de la virole 3 afin de maintenir le dispositif d'insertion 5 en regard de l'entrée de la virole 3.

L'étape de poussée débute après que les moyens d'accroche 6 lâchent le tronçon de garnissage 2. Après le relâchement du tronçon de garnissage 2 par les moyens d'accroche 6 et avant que les dispositifs télescopiques 22 ne soient déployés pour insérer le tronçon de garnissage 2, ce dernier peut par exemple reposer sur un support de maintien 38 afin que le tronçon de garnissage 2 reste positionné correctement en regard de l'entrée de la virole. Les dispositifs télescopiques 22 se déploient alors afin que le moyen de poussée 23 insère le tronçon de garnissage 2 au sein de la virole 3, tel que ce qui a été décrit précédemment. Une fois l'insertion du tronçon de garnissage 2 effectuée, les dispositifs télescopiques 22 peuvent se rétracter, et le système d'insertion 1 peut de nouveau se déplacer pour récupérer le tronçon de garnissage 2 suivant. Le procédé d'insertion recommence alors à partir de l'étape d'agrippement décrite en figure 4.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un dispositif d'insertion horizontale d'un tronçon de garnissage au sein d'une virole comprenant un moyen de poussée entraîné par des dispositifs télescopiques et assurant une limitation des frottements exercés sur le tronçon de garnissage inséré. Des variantes non décrites ici pourraient être mises en oeuvre sans sortir du contexte de l'invention, dès lors que, conformément à l'invention, elles comprennent un dispositif d'insertion conforme à l'invention.

## Revendications

1. Dispositif d'insertion (5) d'au moins un tronçon de garnissage (2) pour une colonne de séparation gaz/liquide au sein d'une virole (3) cylindrique, comprenant une base (8) pourvue de moyens d'accroche (6) configurés pour agripper un tronçon de garnissage (2) et disposés régulièrement autour d'un axe principal (11), **caractérisé en ce que** le dispositif d'insertion (5) comprend au moins deux dispositifs télescopiques (22) solidaires de la base (8) et au moins un moyen de poussée (23) solidaire d'une extrémité de chacun des deux dispositifs télescopiques (22), les dispositifs télescopiques (22) étant configurés pour se déployer et entraîner un déplacement du moyen de poussée (23).

2. Dispositif d'insertion (5) selon la revendication 1, dans lequel les dispositifs télescopiques (22) sont agencés de manière régulière autour de l'axe principal (11).

3. Dispositif d'insertion (5) selon la revendication 1 ou 2, dans lequel les dispositifs télescopiques (22) et les moyens d'accroche (6) sont agencés sur un montant périphérique (10) de la base (8).

4. Dispositif d'insertion (5) selon l'une quelconque des revendications précédentes, dans lequel chaque dispositif télescopique (22) présente une force de poussée d'au moins 1t.

5. Dispositif d'insertion (5) selon l'une quelconque des revendications précédentes, dans lequel les dispositifs télescopiques (22) sont pilotés individuellement l'un par rapport à l'autre.

6. Dispositif d'insertion (5) selon l'une quelconque des revendications précédentes, dans lequel les dispositifs télescopiques (22) sont des actionneurs linéaires à chaine.

7. Dispositif d'insertion (5) selon l'une quelconque des revendications précédentes, dans lequel le moyen de poussée (23) est configuré pour être au contact du tronçon de garnissage (2) dans au moins une zone annulaire périphérique (31).

8. Dispositif d'insertion (5) selon la revendication précédente, dans lequel le moyen de poussée (23) présente une forme annulaire, une dimension radiale de la forme annulaire correspondant à une dimension radiale de la zone annulaire périphérique (31).

9. Dispositif d'insertion (5) selon l'une quelconque des revendications précédentes, comprenant un organe de maintien (32) des dispositifs télescopiques (22), ledit organe de maintien (32) reliant mécaniquement les dispositifs télescopiques (22) entre eux.

10. Système d'insertion (1) d'au moins un tronçon de garnissage (2) pour une colonne de séparation gaz/liquide au sein d'une virole (3) cylindrique, comprenant une structure porteuse (4) et un dispositif d'insertion (5) selon l'une quelconque des revendications précédentes, le dispositif d'insertion (5) étant porté par la structure porteuse (4) de sorte à ce que les dispositifs télescopiques (22) soient aptes à se déployer selon une direction horizontale.

11. Système d'insertion (1) selon la revendication précédente, dans lequel le dispositif d'insertion (5) est apte à effectuer dans son ensemble un mouvement de translation (35) de manière relative à la structure porteuse (4).

12. Système d'insertion (1) selon la revendication 10 ou 11, dans lequel le dispositif d'insertion (5) est apte à effectuer dans son ensemble une rotation (36) de manière relative à la structure porteuse (4).

13. Procédé d'insertion d'au moins un tronçon de garnissage (2) pour une colonne de séparation gaz/liquide au sein d'une virole (3) cylindrique mis en oeuvre par un système d'insertion (1) selon l'une quelconque des revendications 10 à 12, comprenant :
• une étape d'agrippement d'un tronçon de garnissage (2) par les moyens d'accroche (6) du dispositif d'insertion (5),
• une étape de rotation dans son ensemble du dispositif d'insertion (5) par rapport à la structure porteuse (4),
• une étape de déplacement du système d'insertion (1) jusqu'à la virole (3) grâce à la structure porteuse (4),
• une étape de positionnement du tronçon de garnissage (2) au niveau d'une entrée de la virole (3),
• une étape de poussée du tronçon de garnissage (2) au sein de la virole (3) par un mouvement de translation des dispositifs télescopiques (22) et du moyen de poussée (23) par rapport à la base (8).

## Patentansprüche

1. Vorrichtung zum Einsetzen (5) mindestens eines Packungsabschnitts (2) für eine Gas-Flüssigkeit-Trennkolonne ins Innere eines zylindrischen Mantels (3), beinhaltend eine Basis (8), die über Anhängemittel (6) verfügt, die dazu konfiguriert sind, einen Packungsabschnitt (2) zu greifen, und regelmäßig um eine Hauptachse (11) angeordnet sind, **dadurch gekennzeichnet, dass** die Vorrichtung zum Einsetzen (5) mindestens zwei Teleskopvorrichtungen (22), die mit der Basis (8) fest verbunden sind, und mindestens ein Schubmittel (23), das mit einem Ende jeder der zwei Teleskopvorrichtungen (22) fest verbunden ist, beinhaltet, wobei die Teleskopvorrichtungen (22) dazu konfiguriert sind, sich auszubreiten und eine Bewegung des Schubmittels (23) zu bewirken.

2. Vorrichtung zum Einsetzen (5) nach Anspruch 1, wobei die Teleskopvorrichtungen (22) regelmäßig um die Hauptachse (11) eingerichtet sind.

3. Vorrichtung zum Einsetzen (5) nach Anspruch 1 oder 2, wobei die Teleskopvorrichtungen (22) und die Anhängemittel (6) an einem peripheren Holm (10) der Basis (8) eingerichtet sind.

4. Vorrichtung zum Einsetzen (5) nach einem beliebigen der vorhergehenden Ansprüche, wobei jede Teleskopvorrichtung (22) eine Schubkraft von mindestens 1 t aufweist.

5. Vorrichtung zum Einsetzen (5) nach einem beliebigen der vorhergehenden Ansprüche, wobei die Teleskopvorrichtungen (22) unabhängig voneinander angesteuert werden.

6. Vorrichtung zum Einsetzen (5) nach einem beliebigen der vorhergehenden Ansprüche, wobei die Teleskopvorrichtungen (22) Kettenlinearantriebe sind.

7. Vorrichtung zum Einsetzen (5) nach einem beliebigen der vorhergehenden Ansprüche, wobei das Schubmittel (23) dazu konfiguriert ist, in mindestens einem peripheren ringförmigen Bereich (31) mit dem Packungsabschnitt (2) in Kontakt zu sein.

8. Vorrichtung zum Einsetzen (5) nach dem vorhergehenden Anspruch, wobei das Schubmittel (23) eine ringförmige Form aufweist, wobei eine radiale Abmessung der ringförmigen Form einer radialen Abmessung des peripheren ringförmigen Bereichs (31) entspricht.

9. Vorrichtung zum Einsetzen (5) nach einem beliebigen der vorhergehenden Ansprüche, beinhaltend ein Organ zum Halten (32) der Teleskopvorrichtungen (22), wobei das Halteorgan (32) die Teleskopvorrichtungen (22) mechanisch untereinander verbindet.

10. System zum Einsetzen (1) mindestens eines Packungsabschnitts (2) für eine Gas-Flüssigkeit-Trennkolonne ins Innere eines zylindrischen Mantels (3), beinhaltend eine Tragstruktur (4) und eine Vorrichtung zum Einsetzen (5) nach einem beliebigen der vorhergehenden Ansprüche, wobei die Vorrichtung zum Einsetzen (5) von der Tragstruktur (4) so getragen wird, dass die Teleskopvorrichtungen (22) dazu fähig sind, sich in einer horizontalen Richtung auszubreiten.

11. System zum Einsetzen (1) nach dem vorhergehenden Anspruch, wobei die Vorrichtung zum Einsetzen (5) dazu fähig ist, in ihrer Gesamtheit eine Translationsbewegung (35) relativ zu der Tragstruktur (4) auszuführen.

12. System zum Einsetzen (1) nach Anspruch 10 oder 11, wobei die Vorrichtung zum Einsetzen (5) dazu fähig ist, in ihrer Gesamtheit eine Drehung (36) relativ zu der Tragstruktur (4) auszuführen.

13. Verfahren zum Einsetzen mindestens eines Packungsabschnitts (2) für eine Gas-Flüssigkeit-Trennkolonne ins Innere eines zylindrischen Mantels (3), das von einem System zum Einsetzen (1) nach einem beliebigen der Ansprüche 10 bis 12 umgesetzt wird, beinhaltend:
• einen Schritt des Greifens eines Packungsabschnitts (2) durch die Anhängemittel (6) der Vorrichtung zum Einsetzen (5),
• einen Schritt des Drehens der Vorrichtung zum Einsetzen (5) in ihrer Gesamtheit in Bezug auf die Tragstruktur (4),
• einen Schritt des Bewegens des Systems zum Einsetzen (1) bis zu dem Mantel (3) mit Hilfe der Tragstruktur (4),
• einen Schritt des Positionierens des Packungsabschnitts (2) an einem Eingang des Mantels (3),
• einen Schritt des Schiebens des Packungsabschnitts (2) ins Innere des Mantels (3) durch eine Translationsbewegung der Teleskopvorrichtungen (22) und des Schubmittels (23) in Bezug auf die Basis (8).

## Claims

1. Insertion device (5) for inserting at least one packing section (2) for a gas/liquid separation column into a cylindrical casing (3), comprising a base (8) provided with retaining means (6) configured to grip a packing section (2) and disposed evenly around a main axis (11), **characterized in that** the insertion device (5) comprises at least two telescopic devices (22) secured to the base (8) and at least one pushing means (23) secured to one end of each of the two telescopic devices (22), the telescopic devices (22) being configured to deploy and to drive a movement of the pushing means (23).

2. Insertion device (5) according to Claim 1, wherein the telescopic devices (22) are arranged evenly around the main axis (11).

3. Insertion device (5) according to Claim 1 or 2, wherein the telescopic devices (22) and the retaining means (6) are arranged on a peripheral member (10) of the base (8).

4. Insertion device (5) according to any one of the preceding claims, wherein each telescopic device (22) has a pushing force of at least 1 t.

5. Insertion device (5) according to any one of the preceding claims, wherein the telescopic devices (22) are controlled individually in relation to one another.

6. Insertion device (5) according to any one of the preceding claims, wherein the telescopic devices (22) are linear chain actuators.

7. Insertion device (5) according to any one of the preceding claims, wherein the pushing means (23) is configured to be in contact with the packing section (2) in at least one peripheral annular area (31).

8. Insertion device (5) according to the preceding claim, wherein the pushing means (23) has an annular shape, a radial dimension of the annular shape corresponding to a radial dimension of the peripheral annular area (31).

9. Insertion device (5) according to any one of the preceding claims, comprising a holding member (32) for the telescopic devices (22), said holding member (32) mechanically connecting the telescopic devices (22) to each other.

10. Insertion system (1) for inserting at least one packing section (2) for a gas/liquid separation column into a cylindrical casing (3), comprising a bearing structure (4) and an insertion device (5) according to any one of the preceding claims, the insertion device (5) being borne by the bearing structure (4) such that the telescopic devices (22) are able to deploy in a horizontal direction.

11. Insertion system (1) according to the preceding claim, wherein the insertion device (5) is able in its entirety to carry out a translational movement (35) relative to the bearing structure (4).

12. Insertion system (1) according to Claim 10 or 11, wherein the insertion device (5) is able in its entirety to carry out a rotation (36) relative to the bearing structure (4).

13. Method for inserting at least one packing section (2) for a gas/liquid separation column into a cylindrical casing (3), which method is implemented by an insertion system (1) according to any one of Claims 10 to 12 and comprises:
• a step of gripping a packing section (2) by means of the retaining means (6) of the insertion device (5),
• a step of rotating the insertion device (5) in its entirety with respect to the bearing structure (4),
• a step of moving the insertion system (1) up to the casing (3) by virtue of the bearing structure (4),
• a step of positioning the packing section (2) at an inlet of the casing (3),
• a step of pushing the packing section (2) into the casing (3) by means of a translational movement of the telescopic devices (22) and of the pushing means (23) with respect to the base (8).
